# EUROPEAN PATENT SPECIFICATION

(11) **EP 4 373 701 B1**
(45) Date of publication and mention of the grant of the patent: **02.07.2025**
(21) Application number: 21748834.5
(22) Date of filing: 22.07.2021
(51) Int. Cl.: B60L 53/16, B60L 53/65, B60L 53/31, B62H 3/00, B62K 3/00

(54) **CHARGING STATION FOR AN ELECTRIC SCOOTER AND ELECTRIC SCOOTER**
LADESTATION FÜR EINEN ELEKTROROLLER UND ELEKTROROLLER
BORNE DE RECHARGE POUR UNE TROTTINETTE ÉLECTRIQUE ET TROTTINETTE ÉLECTRIQUE

(43) Date of publication of application: 29.05.2024
(73) Proprietor: Bolt Technology Oü, 101034 Tallinn (EE)
(72) Inventor: SAARIK, Erki, 10134 Tallinn (EE); VÕRNO, Hendrik, 10134 Tallinn (EE); PETROV, Martin, 10134 Tallinn (EE); REINSALU, Ardo, 10134 Tallinn (EE); TAMM, Klemet-Gustav, 10134 Tallinn (EE)
(74) Representative: Berggren Oy
(86) International application number: PCT/EP2021/070496
(87) International publication number: WO 2023/001376

(56) References cited:
- WO-A1-2017/217929
- WO-A1-2021/080525
- US-A1- 2020 361 328

## Description

### FIELD OF THE INVENTION

The present invention relates in general to charging of light electrical vehicles such as electric scooters and similar two or three-wheel electric vehicles. In particular, however, not exclusively, the present invention concerns a charging station of light electrical vehicles, a charging interface socket, a charging adapter and a light electrical vehicle comprising the charging adapter.

### BACKGROUND

Nowadays light electrical vehicles such as electric scooters (also referred to as electric motorized scooters and e-scooters) and bikes are commonly used especially in city environments. Light electrical vehicles being fast, convenient, eco-friendly way of transport in a city and free-floating rental model, for example, a scooter-sharing system is comfortable and quick solution for scooter riders. The scooter-sharing system can be described by being a service in which electric scooters are made available to use for short-term rental. Similar services are also known for electric bikes.

There however exist several accompanying problems with scooter-sharing systems, one of them being scooter clutter on the streets in the city. As people have a freedom to leave the scooters however they like, it is common that a scooter ends up being parked so that they block the paths of pedestrians, cyclists, and other scooter users.

Furthermore, electric scooters are operated by utilizing electrical power stored into a battery thereof and batteries need to be changed or charged regularly. Battery-related operations are one of the biggest costs for scooter operators. Either scooters need to be taken to warehouses for battery charging or batteries being swapped on the street, the battery-related operations are workforce heavy. There also exist stationary charging stations provided by scooter operators into which electric scooters can be brought and connected for charging. These stations are convenient and practical way to take care of charging. In such charging stations, it is crucial that the scooter can be easily brought and connected for charging and that the charging arrangement is such that the charging is successful and safe, and that the scooter stays on place in the charging station.

WO 2021080525 discloses a charging station and a LEV with an attachment unit on a headtube of the LEV. The attachment unit has an actuation loop in its front part for engaging the LEV to a docking station and two electrical terminal modules in front of the LEV on both sides of the loop. The attachment unit also comprises a RFID tag, which place is not specified.

US 2020361328 discloses a charging system including a charging adapter configured to be mounted on a light electric vehicle (LEV), a charging station, and a processor configured to control charging of the LEV. The charging adapter has electrical contacts for docking with a charging station and a charging interface for supplying power from the charging station to a battery of the LEV.

### SUMMARY

An objective of the present invention is to provide a charging station for light electric vehicles and a charging interface socket for charging stations. Another objective of the present invention is to provide a charging adapter for a light electric vehicle, a light electric vehicle comprising a charging adapter.

The objectives of the invention are reached by a charging station for an electric scooter, and an electric scooter as defined by the respective independent claims.

According to a first aspect, there is provided a charging adapter. The charging adapter is configured to be mounted on a headtube of a light electric vehicle, the charging adapter comprises an RFID tag and two electrical contacts for receiving electric power from an electric scooter charging station. Those two electrical contacts are arranged on sides of the headtube and both sides of the RFID tag, which is configured to face the travelling direction of the light electric vehicle, when the charging adapter is mounted on the headtube.

According to an example embodiment, the RFID tag and two electrical contacts are arranged at outer surface of the charging adapter. According to an embodiment, the inner surface of the charging adapter is configured to be mounted against the headtube. According to an embodiment, the charging adapter has a shape corresponding a letter U in the horizontal plane. According to an embodiment, the RFID tag is arranged to the tip of the letter u-shaped charging adapter. According to an embodiment, the charging adapter has a shape of a cross-section of the headtube. According to a second aspect, there is provided a light electric vehicle. The light electric vehicle comprises a charging adapter according to the first aspect and any one of its example embodiment.

According to an example embodiment, the light electric vehicle is an electric scooter. According to an example embodiment, the light electric vehicle further comprise a GPS tracker chip.

According to a third aspect, there is provided a charging interface socket for a charging station. The charging interface socket comprises a notch for receiving a headtube of a light electric vehicle, and an RFID reader for an RFID tag of the light electric vehicle, a fixing mechanism for holding the light electric vehicle in place in the notch, and two electrical contacts for supplying electrical power to a battery of the light electric vehicle on the inner surface of the notch. The RFID reader is arranged at the end of notch of the socket, the fixing mechanism is arranged at or in the vicinity of the mouth of the notch, and the electric contacts are arranged between the RFID reader and the fixing mechanism.

According to an example embodiment, the fixing mechanism comprises two spring-tensioned contact rollers arranged on both sides at or in the vicinity of the mouth of the notch of the charging interface socket. According to an example embodiment, the electrical contacts are spring-loaded contacts.

According to a fourth aspect, there is provided a charging station for charging a light electric vehicle, wherein the charging station (300) comprises at least one charger (302) and at least one charging interface socket (200) according to the third aspect and any one of its example embodiment.

Various other advantages will become clear to a skilled person based on the following detailed description.

The expression "a plurality of" may refer to any positive integer starting from two (2), that is, being at least two.

The terms "first", "second", etc. are herein used to distinguish one element from other element, and not to specially prioritize or place them in order, if not otherwise explicitly stated.

An "electric scooter" is used herein only as an example of a light electric vehicle (LEV). Instead of electric scooters, the present invention is also suitable for electric bikes etc.

The exemplary embodiments of the present invention presented herein are not to be interpreted to pose limitations to the applicability of the appended claims. The verb "to comprise" is used herein as an open limitation that does not exclude the existence of also unrecited features. The features recited in dependent claims are mutually freely combinable unless otherwise explicitly stated.

The novel features which are considered as characteristic of the present invention are set forth in particular in the appended claims. The present invention itself, however, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figures 1A-1C illustrate schematically an electric scooter with a charging adapter according to an example embodiment from different viewing angles.
Figures 2A-2C illustrate schematically a charging interface socket of a charging station according to an example embodiment from different viewing angles.
Figure 3 illustrates schematically a charging station according to an example embodiment.

### DETAILED DESCRIPTION OF SOME EMBODIMENTS

The idea of the present invention is to provide a safe, low-cost, user-friendly, and low-maintenance light electric vehicle (LEV) charging system requiring minimal or no input from the user so that riders find it easy to bring LEVs for charging . When LEVs end up to the charging stations it means that LEVs could be charged for the next users and less LEVs end up cluttering the streets in the city.

A rider, when finishing a LEV ride, for example an electric scooter ride and being close to a charging station can just push the LEV into the charging station, which charging interface socket is configured to receive a charging adapter mounted on a headtube of the LEV, for example, of the electric scooter. The outer surface of the charging adapter configured to face the charging interface socket comprises an RFID tag for identification of the LEV and two electrical contacts for receiving electric power for a battery of the LEV. The outer surface of the charging adapter is opposite to the inner surface of the adapter configured to be positioned against the headtube. When the charging adapter is mounted on a headtube of a LEV the RFID tag of the adapter is facing the front i.e. to the riding direction, and electrical contacts are arranged on the sides of the adapter and the headtube, one on each side. The charging adapter may, for example, have a shape substantially corresponding the letter U or horizontal cross-section of the headtube. The charging adapter has such a size and shape that it is suitable to be mounted on or around a headtube of a LEV. It is however possible that the charging adapter is an additional separate piece having, for example, a rectangular or circular shape or any other suitable shape for a charging adapter, which charging adapter is arranged to be mounted i.e. fixed to the front part of a headtube of a LEV by a fixing element. The fixing element may be, for example, a cable tie, a metal cable tie, or any other fixing means suitable for fixing a charging adapter around a headtube of a LEV. In this context, mounting of an adapter on a headtube covers situations when the adapter is arranged partially or completely around the headtube or on the headtube. It is possible, that the RFID tag is embedded inside the adapter i.e. it is not on the outer surface of the adapter, or it is on the outer surface of the adapter. The adapter may, for example, be made of plastic or other suitable material.

A charging interface socket of a charging station may comprise a notch or corresponding into which a headtube of a LEV is configured to be inserted. The form of the charging interface socket may, for example, substantially correspond the letter U in the horizontal plane. The charging interface socket comprises on its inner surface i.e. in the notch a RFID reader for reading an RFID tag of a charging adapter of a LEV and a fixing mechanism for the LEV, and two electrical contacts for supplying electrical power to a battery of the LEV. The fixing mechanism may comprise, for example, two spring-tensioned contact rollers arranged on the inner surface of ends of the U-shaped socket i.e. at or near i.e. in the vicinity the mouth of the notch. The spring-tensioned rollers are configured to physically fix the scooter pushed into the socket in place to the charging station for charging and in a case of fully charged battery for storing and supporting the LEV. The spring-tensioned rollers are configured to press both sides of the headtube of the LEV and/or both sides of the charging adapter arranged on the headtube so that the LEV, headtube and its charging adapter are fix in their place to the charging station. It is also possible that the spring-tensioned rollers are configured to press the back side of the headtube instead of the sides of the headtube and/or sides of the charging adapter. The RFID reader is arranged at the end of the notch of the socket, and it is configured to be positioned against or in the vicinity of an RFID tag of the LEV pushed into the charging interface socket of the charging station for charging. The fourth side, between the ends of the U-shaped charging interface socket, or a side opposite the end of the notch, is open because the LEV is configured to be pushed through it into the charging interface socket of the charging station. The electric contacts are arranged between the RFID reader and a spring-tensioned roller. The charging interface socket may further comprise on its inner surface a locking mechanism for locking the LEV to the charging station.

A LEV comprises a chargeable battery, a charging adapter mounted according to the present invention on a headtube of the LEV, and required electronics and circuitry needed for charging the battery. The LEV may further comprise a GPS tracker chip, which enables a real-time GPS location tracking of the LEV using any suitable existing method.

A charging station may comprise one or more chargers as a power source wherefrom the power is configured to be transmitted to a battery of a LEV. A physical electrical connection for transmitting power from the charging station and the LEV is configured to be established between electrical contacts of the socket, for example, electrical spring contacts, and the electrical contacts of the adapter of the LEV. Charging may be initiated when an RFID tag of a LEV arranged to a socket of a charging station is read and recognized by an RFID reader of the station as an RFID tag registered for the charging station i.e. determined as the registered RFID tag. The charging station may be configured to charge only those LEVs, which comprise registered RFID tags. The station may not need to determine the type of the battery of the LEV, the power type of the power source, nor control the power based on the type of the battery and the type of the power source. This is because when the LEV comprises a registered RFID tag, a battery of that LEV is such that power received from the charging station is determined to be suitable for it. In other words, the station reads and recognizes the RFID tag of the LEV by its RFID tag reader and computing unit as a registered RFID tag before it starts the charging. However, it is also possible a charging station is compatible with two or more different charging voltages and the voltage to be used for charging is decided based on the read RFID tag and information relating to it in the server.

However, the decision to initiate charging or not may further require that a GPS location of a LEV corresponds a location of a charging station in question. The decision of this correspondence may be made, for example, in an external computing device, for example, in a server or cloud, which receives the information from the charging station and GPS tracking software tracking the LEV.

There may be several reasons why to position electric connectors on the sides of a charging adapter and a charging interface socket according to examples of the present invention instead of to the front of a LEV or to the end of the notch of the socket, a few of them are the following ones. Firstly, it may be possible to get more up-down tolerance for the connections between the electrical contacts of the charging adapter and the electrical contacts of the charging interface. Secondly, contacts on different sides further increase safety compared to a situation wherein contacts are next to each other, as the distance between positive and negative contact terminals is larger and thus a risk of a short circuit is lower. Thirdly, contacts on the sides are less prone to damages. And fourthly, because contacts are arranged on the sides, it is possible to position an RFID tag in front of the adapter. If the contacts would be in the front and the RFID tag would be on the side, there may not be enough room for an RFID reader antenna on the side of a socket of a charging station due to a fixing mechanism, for example, spring-tensioned rollers.

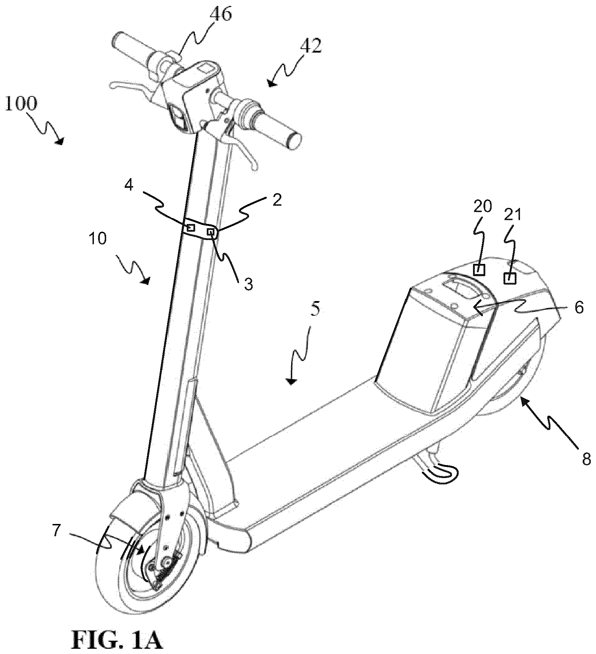

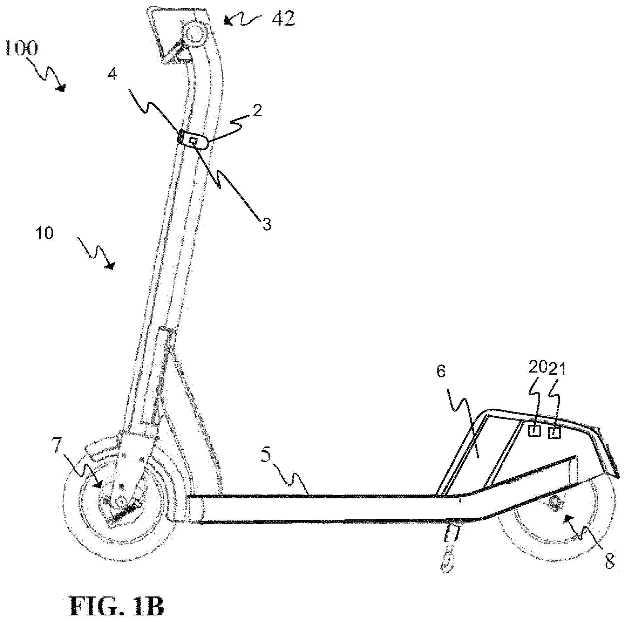

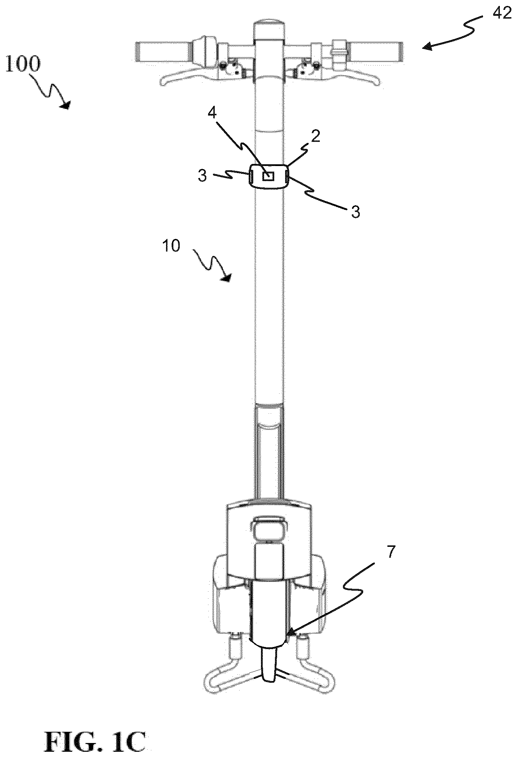

Figures 1A-1C illustrate schematically an electric scooter 100 with a charging adapter 2 according to an example embodiment from different viewing angles. Fig. 1A illustrates a perspective view of the electric scooter 100, Fig. 1B illustrates the electric scooter 100 from a side, and Fig. 1C from the front.

In various example embodiments, the electric scooter 100 comprises a frame 5, a front wheel support portion 7 for supporting at least one front wheel, and a rear wheel support portion 8 for supporting at least one rear wheel, wherein the front wheel support portion 7 and the rear wheel support portion 8 are coupled to the frame 5, an electric motor (not shown in Figs. 1A-1C), and a controlling unit 21. The controlling unit is, preferably, configured to control the operation of the electric scooter 100, especially at least of the electric motor thereof. In various embodiments, the controlling unit may comprise one or more processing units, such as processor(s), and memory, such as non-transitory or non-volatile memory storage medium, for storing instructions executable by the processing unit(s) for operating the scooter 100. Furthermore, the controlling unit may comprise electrical power converter for converting and/or controlling the current being injected to the electric motor. The controlling unit 21 may be substantially a single unit or being distributed in more than one positions. In overall, the position of the controlling unit is not limited to any specific position, but it may reside basically anywhere in the scooter 100.

In various embodiments, the electric motor(s) may be arranged for rotating at least a front wheel coupled a front wheel support portion 7 and/or at least a rear wheel coupled to the rear wheel support portion 8. The electric motor may be a hub motor in the front and/or rear wheel.

In Figs. 1A-1C, the electric scooter 100 comprises a chargeable battery 6 and a charging adapter 2 mounted on a headtube 10 of the electric scooter 100. The charging adapter 2 comprises two electrical contacts 3 (only one electrical contact is shown in Figs. 1A-1B) on the sides of the charging adapter 2 and on the sides of the headtube, and an RFID tag 4 in front of the charging adapter 2 facing the riding direction of the scooter 100. The mounting height of the charging adapter 2 depends on the height of a charging interface socket of a charging station, wherein the scooter 100 is configured to be charged. The charging adapter 2 may be mounted on the headtube 10, for example, by glue, by fixing means, for example, by screws, or by a collar or corresponding (not shown). The electric scooter 100 further comprises required electronics and circuitry (not shown) needed for charging the battery 6 through the charging adapter 2.

Furthermore, as shown in Figs. 1A-1C, the battery 6 may be coupled to the frame 5 and arranged in a battery case (not shown). In various embodiments, the electric scooter 100 may comprise a lock device (not shown) for locking the battery 6 inside the battery case. Still further, as shown in Figs. 1A-1C, the headtube 6 is configured to act as a steering column comprising a handle bar 42, wherein speed adjusting means 46 are coupled to the handle bar 42, and wherein the speed adjusting means 46 are at least in communication connection with the controlling unit 21.

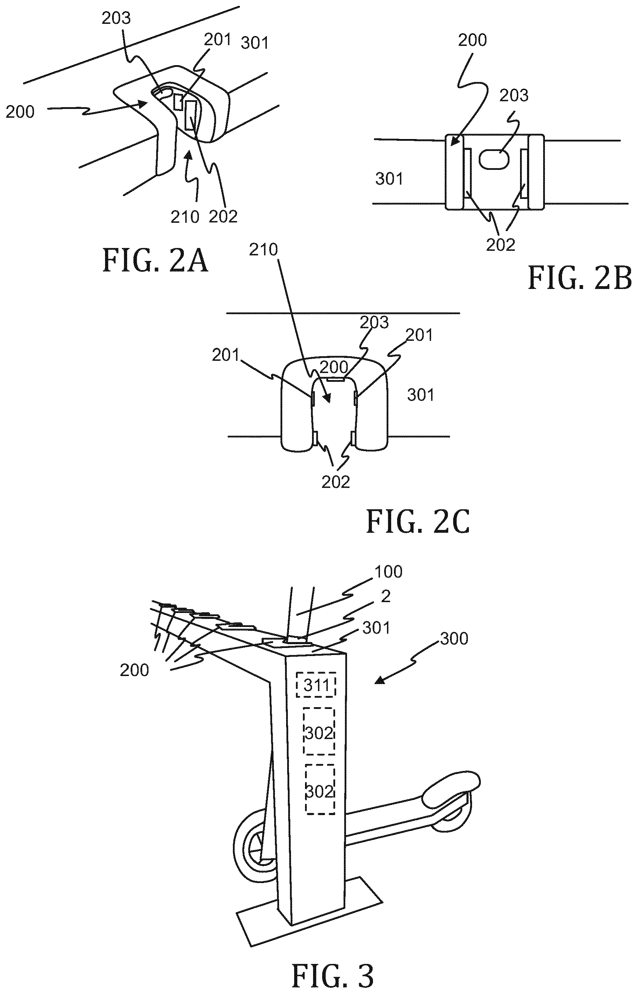

Figures 2A-2C illustrate schematically a charging interface socket 200 of a charging station 300 according to an example embodiment from different viewing angles. Fig. 2A illustrates a perspective view of the charging interface socket 200, Fig. 2B illustrates the charging interface socket 200 from the front i.e. a direction wherefrom a light electric vehicle, for example, a scooter is configured to be pushed to the charging station, and Fig. 2C from above. The charging interface socket 200 is arranged in connection with the charging station, for example, to a horizontal support plate of the charging station 301 or some other suitable part of the charging station.

In various example embodiments, the charging interface socket 200 comprises a notch 210 for receiving a headtube of a light electric vehicle and a charging adapter mounted on the headtube. It may say that the charging interface socket 200 could, for example, have a shape that substantially corresponds the letter U. The charging interface socket 200 further comprises, on the inner surface of the notch 210, an RFID reader 203 for a RFID tag of the light electric vehicle, a fixing mechanism 202 for holding the light electric vehicle in place in the notch 210 and in the charging station 300, and two electrical contacts 201 to be connected with electric contacts of the adapter. The fixing mechanism 202 comprises, in this example embodiment, two spring-tensioned contact rollers arranged at or near the mouth of the notch 210 of the socket 200. The electrical contacts 201 are in this example embodiment spring contacts so that the contact with the contacts of the charging adapter is easier, more reliable, and ensures electric contact in a wide range of tolerances. The socket 200may comprise inside it a rubber cushion for making the insertion of the LEV to the socket 200 smoother. The charging interface socket 200 maybe made of plastic.

In Figure 3, is shown a charging station 300 for charging light electric vehicles 100, for example, electric scooters 100 comprising a charging adapter 2 shown in FIGs 1A-1C. The charging station 300 comprises two chargers 302 and a plurality of charging interface sockets 200 for receiving a light electric vehicle.

However, it is possible that there is one charger 302 per one interface socket 200. But it is also possible to have two or more chargers 302 per one socket 300. Having two or more chargers 302 may give flexibility in terms of battery voltage. The charging interface sockets 200 are arranged, in this example embodiment, to a support plate 301 of the charging station 300, for example, to a horizontal support plate 301. But it is also possible that they are arranged some other way in connection with the charging station 300 for receiving light electric vehicles. The number of charging interface sockets 200 of the charging station 300 is not limited to the shown number, but it may vary and depend for example on a need, size or charging capacity of the charging station 300.

The charging station 300 further comprises a controlling unit 311. The controlling unit is, preferably, configured to control the operation of the charging station 300, especially at least charging of LEVs. In various embodiments, the controlling unit may comprise means for receiving information of read RFID tags of light electric vehicles, such as a receiver or transceiver, one or more processing units, such as processor(s), and memory, such as non-transitory or non-volatile memory storage medium, for storing registered RFID tags and instructions executable by the processing unit(s) for, for example, comparing the read RFID tags to registered RFID tags in order to determine whether to start charging or not. The controlling unit 311 may further comprise receiving means, such as a receiver or transceiver, for receiving information, for example, from an external unit or cloud storage, indicating whether or not a location of a LEV comprising a registered RFID correspond to the location of the charging station 300. However, it is also possible that the controlling unit 311 of the charging station 300 performs this analysis by itself. This location correspondence information may further to be used for determining whether to charge a light electric vehicle or not. In other words, if locations corresponds, the charging could be started.

Furthermore, the controlling unit may comprise electrical power converter for converting and/or controlling the current being transmitted to a battery of a light electric vehicle. The controlling unit may be substantially a single unit or being distributed in more than one positions. In overall, the position of the controlling unit is not limited to any specific position, but it may reside basically anywhere in the charging station 300.

In the description specific terminology is employed for the sake of clarity. The invention, however, it is not intended to be limited to the specific terminology so selected. Thus, it is to be understood that each specific element includes all technical equivalents that operate in the same or similar manner to accomplish the same or similar functions.

## Claims

1. A charging adapter, wherein the charging adapter (2) is mountable on a headtube (10) of a light electric vehicle (100), the charging adapter (2) comprises an RFID tag (4) readable and recognizable by an RFID reader of an electric scooter charging station of the light electric vehicle (100), and two electrical contacts (3) for receiving electric power from the electric scooter charging station, **characterised in that** said two electrical contacts (3) are arranged on sides of the headtube (10) and the RFID tag (4), which RFID tag (4) is configured to face the travelling direction of the light electric vehicle (100), when the charging adapter (2) is mounted on the headtube (10).

2. A charging adapter according to claim 1, wherein the RFID tag (4) and two electrical contacts (3) are arranged at outer surface of the charging adapter (2).

3. A charging adapter according to claim 1 or 2, wherein the inner surface of the charging adapter (2) is configured to be mounted against the headtube (10).

4. A charging adapter according to any of claims 1 to 3, wherein the charging adapter (2) has a shape corresponding a letter U in the horizontal plane.

5. A charging adapter according to claim 4, wherein the RFID tag (4) is arranged to the tip of the letter u-shaped charging adapter (2).

6. A charging adapter according to any of claims 1 to 3, wherein the charging adapter (2) has a shape of a cross-section of the headtube (10).

7. A light electric vehicle (100), **characterised in that** the light electric vehicle (100) comprises a charging adapter (2) according to any one of claims 1-6.

8. A light electric vehicle (100) according to claim 7, wherein the light electric vehicle (100) is an electric scooter.

9. A light electric vehicle (100) according to claim 7 or 8, wherein the light electric vehicle (100) further comprise a GPS tracker chip (21).

10. A charging interface socket for a charging station, wherein the charging interface socket (200) comprises a notch (210) for receiving a headtube of a light electric vehicle, and an RFID reader (203) configured to read and recognize an RFID tag of the light electric vehicle, a fixing mechanism (202) for holding the light electric vehicle in place in the notch (210), and two electrical contacts (201) for supplying electrical power to a battery of the light electric vehicle on the inner surface of the notch (210), **characterized in that** the RFID reader (203) is arranged at the end of notch (210) of the socket (200), the fixing mechanism (202) is arranged at or in the vicinity of the mouth of the notch (210) and the electric contacts are arranged between the RFID reader (203) and the fixing mechanism (202).

11. A charging interface socket according to claim 10, wherein the fixing mechanism (202) comprises two spring-tensioned contact rollers arranged on both sides at or in the vicinity of the mouth of the notch (210) of the charging interface socket (200).

12. A charging interface socket according to claim 10 or 11, wherein the electrical contacts (201) are spring-loaded contacts.

13. A charging station for charging a light electric vehicle, wherein the charging station (300) comprises at least one charger (302) and at least one charging interface socket (200) according to claim 10 to 12 for a light electric vehicle.

## Patentansprüche

1. Ladeadapter, wobei der Ladeadapter (2) an einem Steuerrohr (10) eines leichten Elektrofahrzeugs (100) montierbar ist, der Ladeadapter (2) einen RFID-Tag (4), der von einem RFID-Lesegerät einer Ladestation für Elektroroller des leichten Elektrofahrzeugs (100) gelesen und erkannt werden kann, und zwei elektrische Kontakte (3) zum Empfangen von elektrischer Energie von der Ladestation für Elektroroller umfasst, **dadurch gekennzeichnet, dass** die beiden elektrischen Kontakte (3) an den Seiten des Steuerrohrs (10) und des RFID-Tags (4) angeordnet sind, wobei der RFID-Tag (4) so konfiguriert ist, dass er in Fahrtrichtung des leichten Elektrofahrzeugs (100) zeigt, wenn der Ladeadapter (2) am Steuerrohr (10) montiert ist.

2. Ladeadapter nach Anspruch 1, wobei der RFID-Tag (4) und zwei elektrische Kontakte (3) an der Außenfläche des Ladeadapters (2) angeordnet sind.

3. Ladeadapter nach Anspruch 1 oder 2, wobei die Innenfläche des Ladeadapters (2) zur Montage am Steuerrohr (10) ausgebildet ist.

4. Ladeadapter nach einem der Ansprüche 1 bis 3, wobei der Ladeadapter (2) eine Form aufweist, die in der horizontalen Ebene einem Buchstaben U entspricht.

5. Ladeadapter nach Anspruch 4, wobei der RFID-Tag (4) an der Spitze des u-förmigen Ladeadapters (2) angeordnet ist.

6. Ladeadapter nach einem der Ansprüche 1 bis 3, wobei der Ladeadapter (2) die Form eines Querschnitts des Steuerrohrs (10) aufweist.

7. Leichtes Elektrofahrzeug (100), **dadurch gekennzeichnet, dass** das leichte Elektrofahrzeug (100) einen Ladeadapter (2) nach einem der Ansprüche 1 bis 6 umfasst.

8. Leichtes Elektrofahrzeug (100) nach Anspruch 7, wobei das leichte Elektrofahrzeug (100) ein Elektroroller ist.

9. Leichtes Elektrofahrzeug (100) nach Anspruch 7 oder 8, wobei das leichte Elektrofahrzeug (100) ferner einen GPS-Tracker-Chip (21) umfasst.

10. Ladeschnittstellenbuchse für eine Ladestation, wobei die Ladeschnittstellenbuchse (200) eine Aussparung (210) zur Aufnahme eines Steuerrohrs eines leichten Elektrofahrzeugs und einen RFID-Lesegerät (203), der zum Lesen und Erkennen eines RFID-Tags des leichten Elektrofahrzeugs konfiguriert ist, einen Befestigungsmechanismus (202) zum Festhalten des leichten Elektrofahrzeugs in der Aussparung (210) und zwei elektrische Kontakte (201) zum Zuführen elektrischer Energie zu einer Batterie des leichten Elektrofahrzeugs an der Innenfläche der Aussparung (210) umfasst, **dadurch gekennzeichnet, dass** der RFID-Lesegerät (203) am Ende der Aussparung (210) der Buchse (200) angeordnet ist, der Befestigungsmechanismus (202) an oder in der Nähe der Mündung der Aussparung (210) angeordnet ist und die elektrischen Kontakte zwischen dem RFID-Lesegerät (203) und dem Befestigungsmechanismus (202) angeordnet sind.

11. Ladeschnittstellenbuchse nach Anspruch 10, wobei der Fixiermechanismus (202) zwei federgespannte Kontaktrollen umfasst, die beidseitig an oder in der Nähe der Mündung der Aussparung (210) der Ladeschnittstellenbuchse (200) angeordnet sind.

12. Ladeschnittstellenbuchse nach Anspruch 10 oder 11, wobei die elektrischen Kontakte (201) federbelastete Kontakte sind.

13. Ladestation zum Laden eines leichten Elektrofahrzeugs, wobei die Ladestation (300) mindestens ein Ladegerät (302) und mindestens eine Ladeschnittstellenbuchse (200) nach Anspruch 10 bis 12 für ein leichtes Elektrofahrzeug umfasst.

## Revendications

1. Adaptateur de charge, dans lequel l'adaptateur de charge (2) peut être monté sur un tube de direction (10) d'un véhicule électrique léger (100), l'adaptateur de charge (2) comprend une étiquette RFID (4) lisible et reconnaissable par un lecteur RFID d'une station de charge de trottinette électrique du véhicule électrique léger (100), et deux contacts électriques (3) pour recevoir de l'énergie électrique provenant de la station de charge de trottinette électrique, **caractérisé en ce que** lesdits deux contacts électriques (3) sont disposés sur des côtés du tube de direction (10) et de l'étiquette RFID (4), laquelle étiquette RFID (4) est configurée pour faire face à la direction de déplacement du véhicule électrique léger (100), lorsque l'adaptateur de charge (2) est monté sur le tube de direction (10).

2. Adaptateur de charge selon la revendication 1, dans lequel l'étiquette RFID (4) et deux contacts électriques (3) sont disposés sur une surface extérieure de l'adaptateur de charge (2).

3. Adaptateur de charge selon la revendication 1 ou 2, dans lequel la surface intérieure de l'adaptateur de charge (2) est configurée pour être montée contre le tube de direction (10).

4. Adaptateur de charge selon l'une quelconque des revendications 1 à 3, dans lequel l'adaptateur de charge (2) a une forme correspondant à une lettre U dans le plan horizontal.

5. Adaptateur de charge selon la revendication 4, dans lequel l'étiquette RFID (4) est disposée à l'extrémité de l'adaptateur de charge en forme de u (2).

6. Adaptateur de charge selon l'une quelconque des revendications 1 à 3, dans lequel l'adaptateur de charge (2) a une forme de section transversale du tube de direction (10).

7. Véhicule électrique léger (100), **caractérisé en ce que** le véhicule électrique léger (100) comprend un adaptateur de charge (2) selon l'une quelconque des revendications 1 à 6.

8. Véhicule électrique léger (100) selon la revendication 7, dans lequel le véhicule électrique léger (100) est une trottinette électrique.

9. Véhicule électrique léger (100) selon la revendication 7 ou 8, dans lequel le véhicule électrique léger (100) comprend en outre une puce de suivi GPS (21).

10. Prise d'interface de charge pour une station de charge, dans laquelle la prise d'interface de charge (200) comprend une encoche (210) pour recevoir un tube de direction d'un véhicule électrique léger, et un lecteur RFID (203) configuré pour lire et reconnaître une étiquette RFID du véhicule électrique léger, un mécanisme de fixation (202) pour maintenir le véhicule électrique léger en place dans l'encoche (210), et deux contacts électriques (201) pour alimenter en énergie électrique une batterie du véhicule électrique léger sur la surface intérieure de l'encoche (210), **caractérisée en ce que** le lecteur RFID (203) est disposé à l'extrémité de l'encoche (210) de la prise (200), le mécanisme de fixation (202) est disposé au niveau ou à proximité de l'embouchure de l'encoche (210) et les contacts électriques sont disposés entre le lecteur RFID (203) et le mécanisme de fixation (202).

11. Prise d'interface de charge selon la revendication 10, dans laquelle le mécanisme de fixation (202) comprend deux rouleaux de contact à ressort disposés des deux côtés au niveau ou à proximité de l'embouchure de l'encoche (210) de la prise d'interface de charge (200).

12. Prise d'interface de charge selon la revendication 10 ou 11, dans laquelle les contacts électriques (201) sont des contacts à ressort.

13. Station de charge pour charger un véhicule électrique léger, dans laquelle la station de charge (300) comprend au moins un chargeur (302) et au moins une prise d'interface de charge (200) selon la revendication 10 à 12 pour un véhicule électrique léger.
